# EUROPÄISCHE PATENTSCHRIFT

(11) **EP 0 509 439 B1**
(45) Veröffentlichungstag und Bekanntmachung des Hinweises auf die Patenterteilung: **14.12.1994**
(21) Anmeldenummer: 92106402.8
(22) Anmeldetag: 14.04.1992
(51) Int. Cl.: B60J 7/04, B60J 7/14

(54) **Dachkonstruktion für Fahrzeuge**
Roof construction for vehicles
Construction de toit pour véhicules

(30) Priorität: 15.04.1991 DE 4112246
(43) Veröffentlichungstag der Anmeldung: 21.10.1992
(73) Patentinhaber: Rockwell Golde GmbH, 60314 Frankfurt (DE)
(72) Erfinder: Schlapp, Albert, W-6072 Dreieich (DE)
(74) Vertreter: Oppermann, Ewald, Dipl.-Ing.

(56) Entgegenhaltungen:
- DE-C- 639 479
- US-A- 3 768 858
- US-A- 3 858 744
- US-A- 4 747 441
- US-A- 5 011 214

## Beschreibung

Die Erfindung bezieht sich auf eine Dachkonstruktion für Fahrzeuge entsprechend dem Oberbegriff des Patentanspruchs 1.

Bei einem derartigen bekannten Fahrzeugdach (DE-C-639 479) sind die längeren Seiten der Deckelteile quer zur Fahrzeuglängsachse ausgerichtet, so daß das Dach durch Verschieben der Deckelteile an in Längsrichtung verlaufenden Schienen nach hinten oder vorn geöffnet und geschlossen wird. Dadurch falten sich die Deckelteile zu einem quer zur Längsrichtung gefalteten und nach oben vorstehenden Paket, das einen erheblichen Luftwiderstand im Fahrbetrieb erzeugt. Weiterhin ist dieses Paket aus gefalteten Deckelteilpaaren infolge des Abstands zwischen den einzelnen gefalteten Deckelteilpaaren durch nach oben offene Spalträume zerklüftet, wodurch Luftwirbel und damit unerwünschte Windgeräusche verursacht werden. Durch die Queranordnung der Deckelteile sind bei langgestreckten Dach-Öffnungen viele Deckelteile und lange Verschiebewege der miteinander durch Gelenkarme verketteten Deckelteile erforderlich. Darüber hinaus ist das bekannte Fahrzeugdach durch Ziehen oder Schieben von Hand zu betätigen, was die Bedienung erschwert. Schließlich ist für die Abdichtung der Deckelteile an jeder Stoßstelle eine Dichtung an einem der Deckelteile vorgesehen, so daß die Abdichtung bei geschlossenem Dach von dem exakten Randeingriff der überlappten Deckelteile abhängt und schon bei geringfügiger Verlagerung der Deckelteile zueinander verlorengeht.

Der Erfindung liegt die Aufgabe zugrunde, eine Dachkonstruktion der eingangs angegebenen Art bereitzustellen, bei welcher durch Zusammenfaltung der Deckelteile verursachter Windwiderstand und Strömungsgeräusche vergleichsweise gering sind, kurze Verschiebewege ermöglicht werden und eine zuverlässige Abdichtung an den Stoßstellen der Deckelteile erreicht wird.

Die gestellte Aufgabe wird erfindungsgemäß durch die kennzeichnenden Merkmale des Anspruchs 1 gelöst. Vorteilhafte Weiterbildungen der Erfindung sind in den Unteransprüchen angegeben.

Bei der erfindungsgemäßen Dachkonstruktion erfolgen alle Bewegungen der Deckelteile quer zur Fahrzeuglängsachse, wodurch sich die Deckelteile bei Öffnungsantrieb in Fahrzeuglängsrichtung orientiert nach oben zusammenfalten und daher nur einen vergleichsweise geringen Luftwiderstand bei nur geringen unerwünschten Windgeräuschen im Fahrbetrieb erzeugen. Die erfindungsgemäße Dachkonstruktion ermöglicht die Realisierung von Dachöffnungen, deren Länge in Fahrzeuglängsrichtung gesehen wesentlich größer ist als die Breite, wobei wegen der Bewegung der Deckelteile quer zur Fahrzeuglängsrichtung dennoch nur geringe Stellwege für das öffnen und das Schließen der Dachöffnung erforderlich sind. Wenn daher für die Bewegung der Deckelteile ein Handkurbelantrieb eingesetzt wird, so sind die Schließ- und Öffnungsbewegungen mit wenigen Kurbelumdrehungen zu erzielen. Die langgestreckte Anordnung der Dachöffnung und der ihr zugeordneten Deckelteile in Längsrichtung des Fahrzeugs macht die erfindungsgemäße Dachkonstruktion besonders für Fahrzeuge mit entsprechend langgestreckten Dachflächen geeignet, insbesondere für sogenannte Großraumlimousinen, Kleinbusse, Caravans u.dgl. Bei derartigen Fahrzeugen erlaubt die erfindungsgemäße Dachkonstruktion eine Öffnung der Dachfläche oberhalb eines hinteren Stauraums oder über zusätzlichen Sitzreihen, wodurch eine ausgezeichnete Be- und Entlüftung auch derartiger Fahrzeuge ermöglicht wird. Das den Spalt zwischen den scharnierten Rändern der Deckelteile eines Paares schließende Dichtungsprofil ist an beiden Rändern dicht befestigt, so daß der Spalt immer und in jeder Relativlage der Deckelteile zuverlässig abgedichtet ist.

Die Dachkonstruktion ist in einer bevorzugten Ausführungsform entsprechend Anspruch 2 ausgebildet. Hierbei sind zwei Paar Deckelteile in einer etwa symmetrischen Anordnung vorgesehen. Hierbei werden die beiden Deckelteilpaare von der Fahrzeuglängsmittelebene ausgehend nach beiden Seiten gefaltet, wodurch zu beiden Seiten der Dachöffnung parallel zur Fahrzeuglängsrichtung gefaltete Wände entstehen, die einen seitlichen Windeinfall in die freigelegte Dachöffnung verhindern, so daß sie gegenüber von seitlich an der Fahrzeugkarosserie auftretenden Luftwirbeln als seitliche Windabweiser wirken. Alternativ kann die Anordnung der Deckelteile auch so erfolgen, daß sie in einer Richtung von der einen zur anderen Seite der Dachöffnung gefaltet werden, insbesondere dann, wenn ein einseitiger seitlicher Windeinfall in die langgestreckte Öffnung aufgrund der Karosserieform nicht zu befürchten oder aber tolerierbar ist.

In einer weiteren Ausbildung der Dachkonstruktion kann eine weitere Dachöffnung entsprechend Anspruch 3 vorgesehen sein. Dieser weiteren Dachöffnung, die in Fahrtrichtung des Fahrzeugs gesehen vor der im hinteren Bereich der Fahrzeugdachfläche befindlichen Dachöffnung angeordnet ist, kann eine in üblicher Weise windabweisend wirkende, vorn scharnierte Lüftungsklappe zugeordnet sein, die auch bezüglich der hinteren Dachöffnung eine Windabweiserfunktion übernimmt. Selbstverständlich kann diese Lüftungsklappe auch unabhängig von einer Betätigung der der hinteren Dachöffnung zugeordneten Deckelteile verschwenkt werden.

Zur Führung jeden Paars von Deckelteilen bedarf nur das nicht in der Nähe des benachbarten Randes der Dachöffnung angelenkte Deckelteil einer einfachen Führung entsprechend Anspruch 4. Wird der hierfür vorgesehene Führungsschuh bzw. werden die Führungsschuhe an der zugeordneten Führungsschiene bzw. Führungsschienen im Sinne einer Dachöffnung verschoben, so bewirkt diese Verschiebung bereits die Zusammenfaltung der beiden Deckelteile nach oben. Dementsprechend sind die Führungsschuhe für den Angriff eines Antriebselements besonders geeignet.

Die Ausbildung der Antriebselemente und ihre Anordnung erfolgen vorteilhaft wie in den Ansprüchen 5 und 6 angegeben ist.

Eine besonders einfache Montage der Dachkonstruktion unter Bereitstellung integrierter Führungen für die Deckelteile wird bei Anwendung der Merkmale des Anspruchs 7 erreicht. Der damit vorgeschlagene Führungsrahmen ermöglicht die vollständige Vormontage einer funktionsfähigen Dachkonstruktion, deren Funktionsprüfung vor dem Einbau und deren einfache Anbringung an den Rändern einer entsprechend vorbereiteten Dachöffnung.

Die Fluchtungslage der Deckelteile bei geschlossenem Dach läßt sich auf einfache Weise entsprechend den Merkmalen des Anspruchs 8 sicherstellen und gegebenenfalls auch durch Anbringung einstellbarer Anschläge justieren.

Den Ansprüchen 9 bis 12 sind vorteilhafte Ausbildungen der Ränder der Deckelteile und der Ränder der Dachöffnung zu entnehmen. Die dort angegebenen Maßnahmen dienen der sicheren Halterung und Abdichtung der Deckelteile in der Dachöffnung bei geschlossenem Dach.

Weitere Einzelheiten der Erfindung werden nachfolgend anhand der ein Ausführungsbeispiel darstellenden Zeichnungen näher erläutert. Darin zeigt:
- Fig. 1: in perspektivischer Darstellung ein Fahrzeugdach mit vorderer separater Lüftungsklappe und hinterer, durch zwei Deckelteilpaare verschließbarer Dachöffnung, in Schließstellung der Lüftungsklappe und der Deckelteile,
- Fig. 2: eine der Fig. 1 entsprechende perspektivische Darstellung, jedoch bei geöffneter Lüftungsklappe und bei durch Zusammenfalten der Deckelteilpaare freigelegter hinterer Dachöffnung,
- Fig. 3: die abgebrochen dargestellte Draufsicht auf den hinteren Bereich des Fahrzeugdaches bei geschlossenen Deckelteilpaaren,
- Fig. 4: die Draufsicht gemäß Fig. 3, jedoch ohne Deckelteile,
- Fig. 5: die Draufsicht gemäß Fig. 4 mit in dicken strichpunktierten Linien eingezeichneten Antriebselementen und in dünnen Linien angedeuteten Deckelteilen,
- Fig. 6: den abgebrochen und verkürzt dargestellten Querschnitt durch die geschlossene Dachkonstruktion entsprechend der Linie VI-VI in Fig. 3,
- Fig. 7: den abgebrochenen und gegenüber Fig. 6 vergrößerten Schnitt durch eine Schwenklageranordnung eines in der Nähe eines Dachöffnungsrandes angelenkten geschlossenen Deckelteils,
- Fig. 8: den abgebrochenen Schnitt entlang der Linie VIII-VIII in Fig. 7,
- Fig. 9: den Schnitt gemäß Fig. 7, jedoch bei ausgeschwenktem Deckelteil,
- Fig. 10: den abgebrochenen gegenüber Fig. 6 vergrößerten Schnitt durch die Scharnierstelle zweier Deckelteile,
- Fig. 11: die abgebrochene Draufsicht auf die Scharnierstelle gemäß Fig. 10,
- Fig. 12: den abgebrochenen Schnitt entlang der Linie XII-XII in Fig. 3,
- Fig. 13: den abgebrochenen Schnitt entlang der Linie XIII-XIII in Fig. 3,
- Fig. 14: den abgebrochenen Schnitt entlang der Linie XIV-XIV in Fig. 13 und
- Fig. 15: den abgebrochenen Schnitt entlang der Linie XV-XV in Fig. 3.

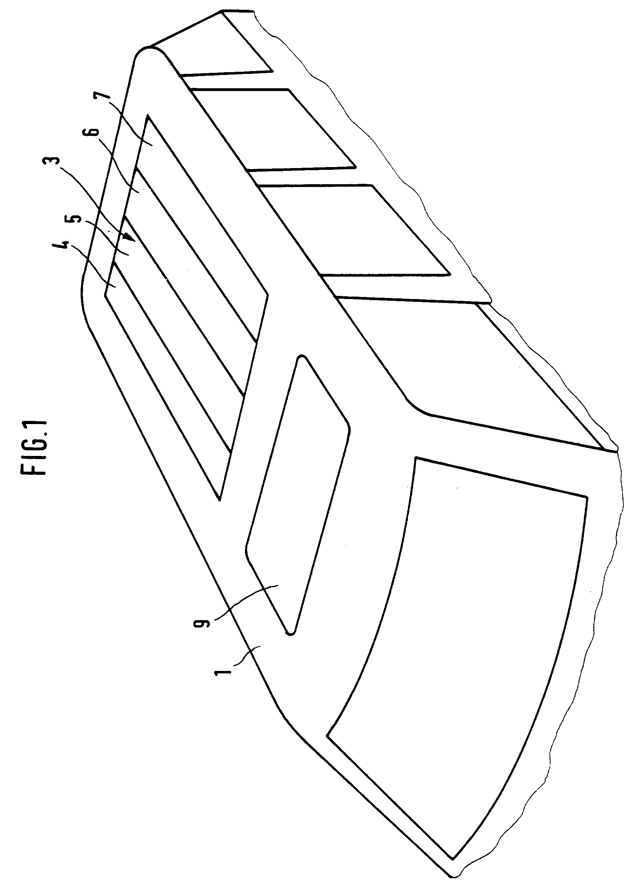

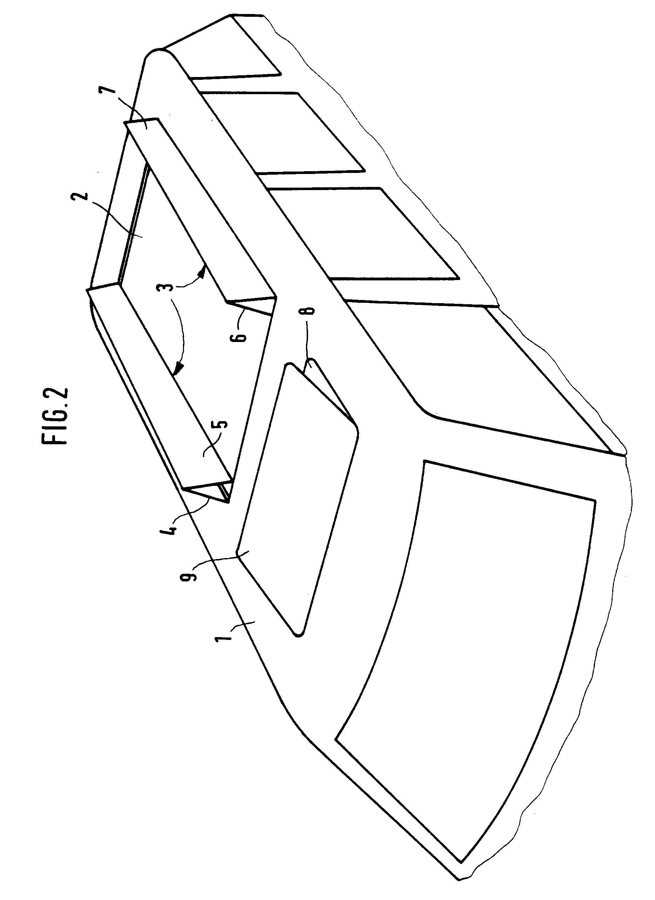

Der in den Fig. 1 und 2 dargestellte Dachbereich eines Lieferwagens, einer Großraumlimousine od.dgl. weist im hinteren Bereich des festen Fahrzeugdaches 1 eine Dachöffnung 2 in Form eines in Fahrtrichtung langgestreckten Rechtecks auf, der ein vierteiliger Deckel 3 zugeordnet ist, der in der Schließstellung die Dachöffnung 2 vollständig ausfüllt und diese in der Öffnungsstellung des vierteiligen Deckels im wesentlichen freilegt, wie aus Fig. 2 hervorgeht. Die vier Deckelteile des Deckels 3 sind in zwei im wesentlichen spiegelbildliche Deckelteilpaare 4, 5 und 6, 7 gegliedert.

Im vorderen Bereich des Fahrzeugdaches 1 befindet sich eine quer zur Fahrzeuglängsachse ausgerichtete weitere Dachöffnung 8, der eine vorn scharnierte und mit ihrer Hinterkante ausstellbare Lüftungsklappe 9 zugeordnet ist. Die Lüftungsklappe bietet eine zusätzliche Lüftungsmöglichkeit im vorderen Bereich des Kraftfahrzeuges und übernimmt zugleich bei freigelegter hinterer Dachöffnung 2 für diese die Funktion eines vorderen Windabweisers. Die Anordnung einer derartigen bekannten Lüftungsklappe ist jedoch eine fakultative Maßnahme, die für die nachfolgend näher beschriebene Dachkonstruktion nicht zwingend erforderlich ist.

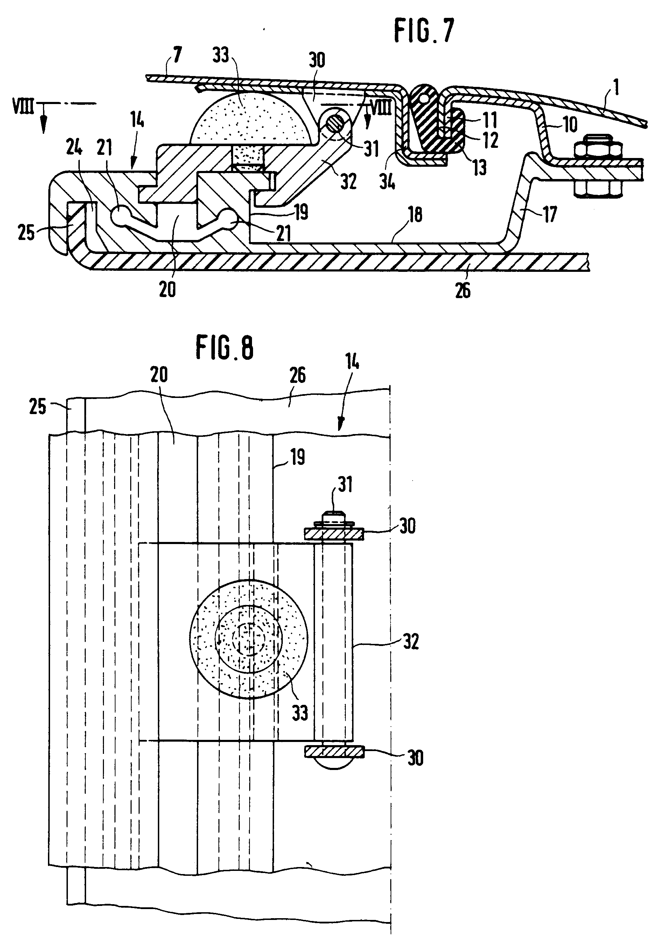

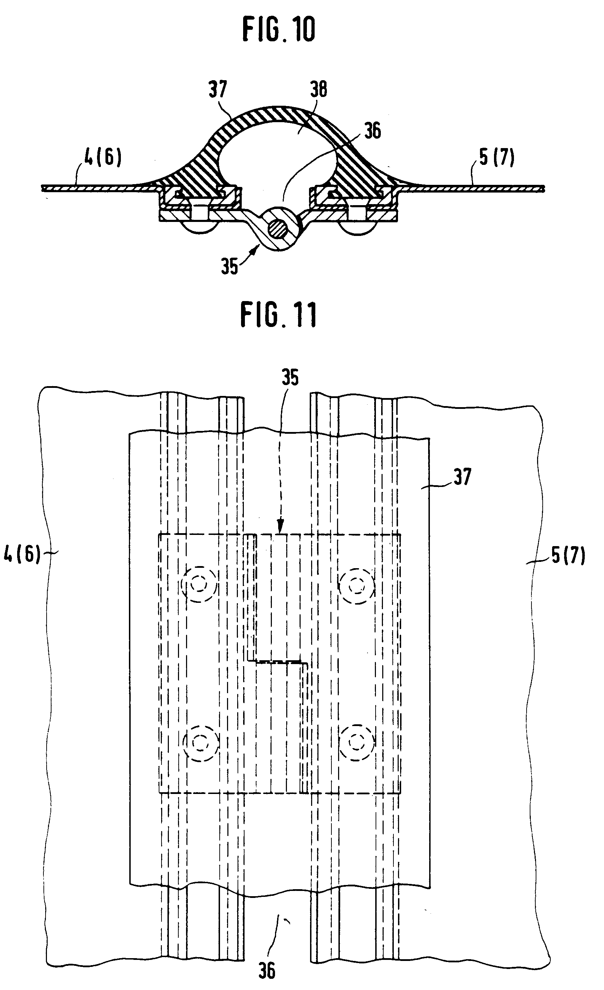

Die Dachöffnung 2 ist allseitig von einem Verstärkungsrahmen 10 umgeben, der unterhalb des festen Fahrzeugdaches 1 angeordnet und mit einem nach unten abgekanteten Rand 11 mit dem ebenfalls nach unten abgebogenen Rand 12 des die Dachöffnung 2 begrenzenden festen Fahrzeugdaches 1 verbunden ist, wie beispielsweise aus den Fig. 7 und 9 hervorgeht. Auf die abgekanteten Ränder 11, 12 ist von unten eine umlaufende Randspaltabdichtung 13 aufgesteckt.

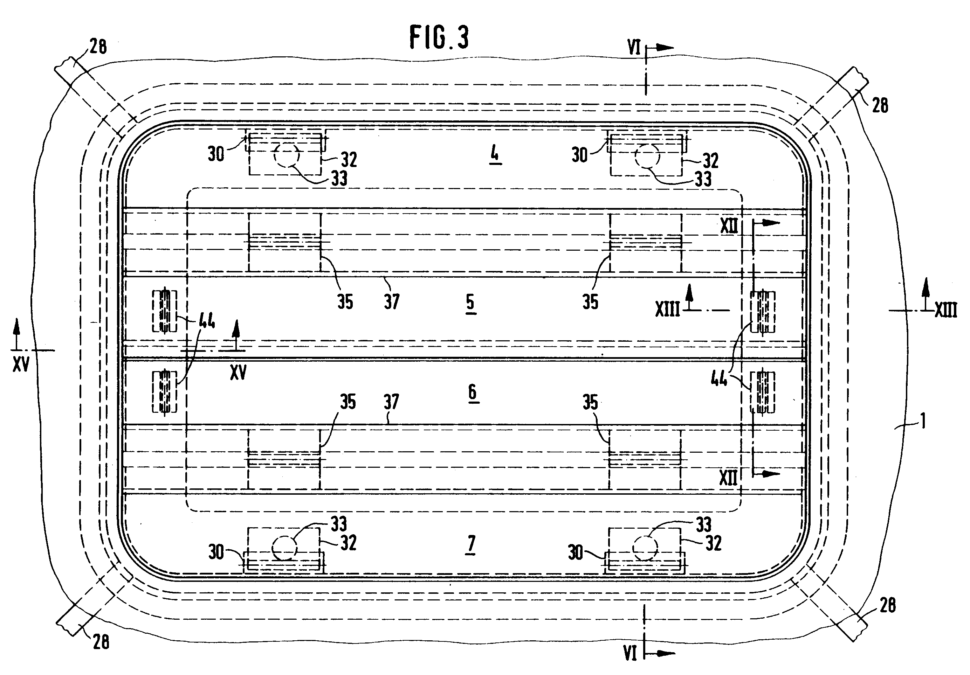

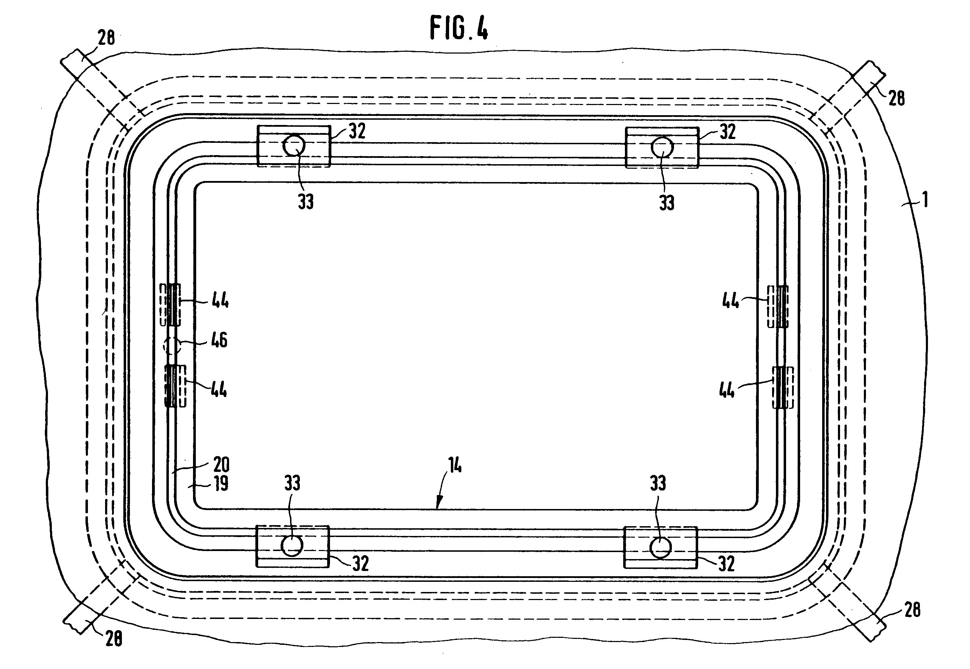

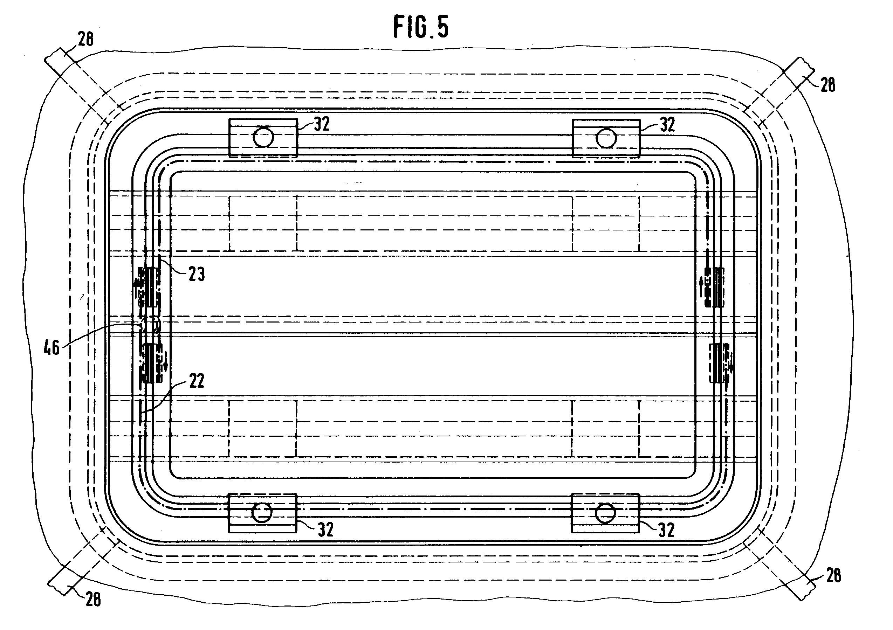

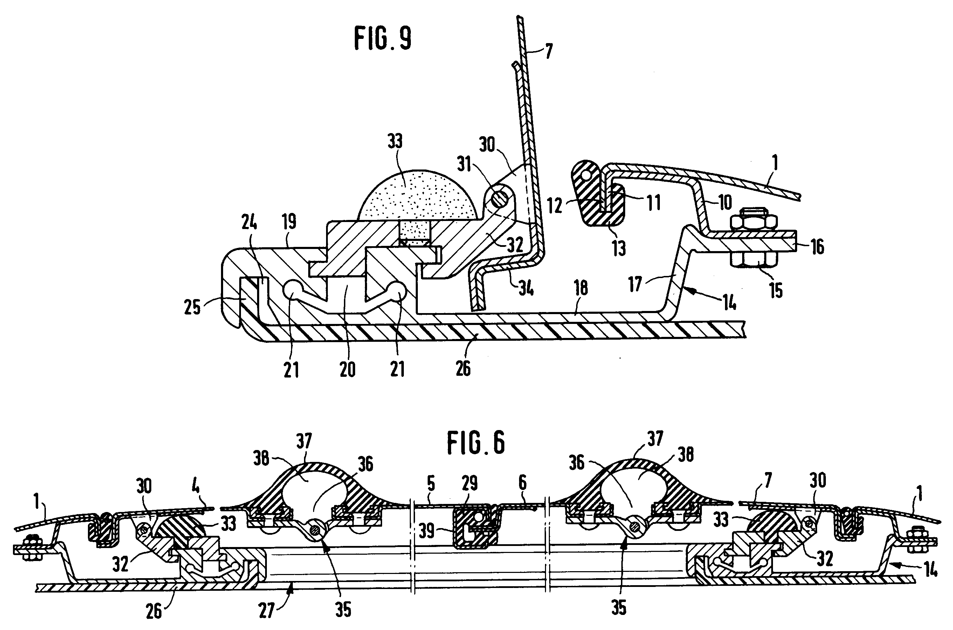

Ein einteiliger, beispielsweise aus einem Strangpreßprofil hergestellter Führungsrahmen 14 ist allseitig von unten am Verstärkungsrahmen 10 durch Verschraubungen 15 befestigt. Die vier Rahmenteile des Verstärkungsrahmens 10 weisen denselben Querschnitt auf. Der äußere Rand 16 des Führungsrahmens 14 ist als Befestigungsflansch ausgebildet, durch den die Verschraubungen hindurchgeführt sind. An ihn schließt sich über einen schräg nach unten weisenden Steg 17 eine trogförmige Wasserrinne 18 an, deren anderer verdickter Rand 19 einen nach oben offenen, U-förmigen Führungskanal 20 aufweist, an den sich in der Nähe seines unteren Endes an beiden Seiten Kabelkanäle 21 zur zug- und drucksteifen Führung von Betätigungskabeln 22 bzw. 23 (Fig. 5) anschließen. Die Kabelkanäle 21 sind in Richtung zum Führungskanal 20 hin schlitzförmig geöffnet. Der innere Rand des Führungsrahmens 14 weist eine nach unten geöffnete Nut 24 auf, in welche der nach oben gebogene Rand 25 einer Dachauskleidung 26 aufgenommen ist, welcher die an die Dachöffnung 2 anschließende Öffnung 27 (Fig. 6) der Dachauskleidung 26 umgibt. An den vier Ecken des Führungsrahmens 14 sind mit der Wasserrinne 18 verbundene Wasserablaufrohre 28 vorgesehen, die in den Fig. 3 bis 5 dargestellt sind.

Innerhalb der Dachöffnung 2 ist der aus vier Deckelteilen 4 bis 7 gebildete Deckel 3 angeordnet. Jeweils zwei gelenkig miteinander verbundene Deckelteile 4, 5 und 6, 7 bilden eine Hälfte des Deckels, wobei sich beide Deckelhälften quer zur Fahrtrichtung derart öffnen lassen, daß sich jeweils ein äußeres Deckelteil 4 bzw. 7 und ein inneres Deckelteil 5 bzw. 6 aneinanderliegend und nach oben aufgestellt an den beiden äußeren Dachrändern befinden. Im geschlossenen Zustand stoßen die inneren Deckelteile 5, 6 unter Zwischenlage eines Abdichtprofilstreifens 29 (Fig. 6) so aneinander, daß die Oberflächen aller Deckelteile 4 bis 7 der Dachquerwölbung folgen.

In der weiteren Beschreibung wird im wesentlichen auf nur eine der spiegelbildlich etwa übereinstimmenden Deckelhälften Bezug genommen. Hierbei wird unter "äußeres Deckelteil" jeweils dasjenige Deckelteil verstanden, welches einem Dachöffnungsrand benachbart angeordnet ist. Das so bezeichnete "innere Deckelteil" schließt sich an das äußere Deckelteil an und ist zur Dachmitte hin angeordnet.

Wie aus Fig. 3 in Verbindung mit den Fig. 6 bis 9 hervorgeht, ist das äußere Deckelteil 4 (7) mit zwei daran befestigten Lagergabeln 30 über Schwenkbolzen 31 an Lagerböcken 32 schwenkbeweglich gelagert. Die Lagerstellen befinden sich in der Nähe des Dachöffnungsrandes 12. Die Lagerböcke 32 sind am verdickten Rand 19 des Führungsrahmens 14 mit Abstand zueinander angeordnet und in geeigneter Weise festgelegt. Das Querschnittsprofil der Lagerböcke 32 ist dem Querschnittsprofil des verdickten Randes 19 so angepaßt, daß die Lagerböcke 32 von den Ecken des Führungsrahmens 14 her durch (nicht dargestellte) schlitzförmige Ausnehmungen hindurch auf den verdickten Rand 19 formschlüssig aufgeschoben werden können und auf diesem verschoben werden, bis ihr Abstand dem Abstand der Lagergabeln 30 am äußeren Deckelteil 4 (7) entspricht.

Auf einer nach oben weisenden Fläche eines jeden Lagerbocks 32 ist ein als pilzförmiger Dämpfer ausgebildeter Anschlag 33 befestigt, dessen Höhe so bemessen ist, daß bei Anlage des äußeren Deckelteils dessen Oberfläche bündig mit der Dachquerwölbung liegt.

Der dem Dachöffnungsrand 12 benachbarte Rand 34 des äußeren Deckelteils 4 (7) ist L-förmig nach unten und außen abgebogen, so daß er die Randspaltabdichtung 13 bei geschlossenem Deckel 3 untergreift (Fig. 7). Das innere Deckelteil 5 (6) ist mit Scharnieren 35 schwenkbeweglich am anderen Rand des äußeren Deckelteils 4 (7) so befestigt, daß die einander gegenüber-liegenden Ränder einen Spalt 36 (Fig. 6, 10) bilden, der in seiner gesamten Länge von einem Dichtungsprofil 37 überbrückt ist, welches jeweils an den Rändern der Deckelteile befestigt ist. Das flexible Dichtungsprofil, das im Querschnitt gesehen hutförmig ausgebildet ist, weist einen nach unten offenen Hohlraum 38 auf, der beim Ausstellen der beiden Deckelteile 4, 5 (6, 7) deren einander benachbarten Ränder und die Scharnieraugen der Scharniere 35 aufnimmt.

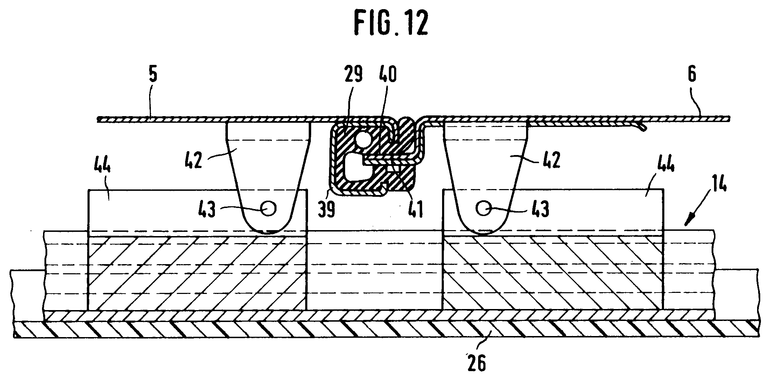

Der der Dachlängsmittelachse nächstliegende Rand des inneren Deckelteils 5 ist nach unten abgebogen und mit einer Aufnahmeleiste 39 fest verbunden, in welche der Abdichtprofilstreifen 29 eingeschoben ist. Der Abdichtprofilstreifen 29 weist einen der Länge nach durchgehenden Schlitz 40 (Fig. 12) auf, in den das dem Abdichtprofilstreifen 29 gegenüberliegende innere Deckelteil 6 mit seinem L-förmig abgebogenen Rand, der zu diesem Zweck einen vorstehenden Flansch 41 aufweist, beim Deckelschließvorgang eingreift.

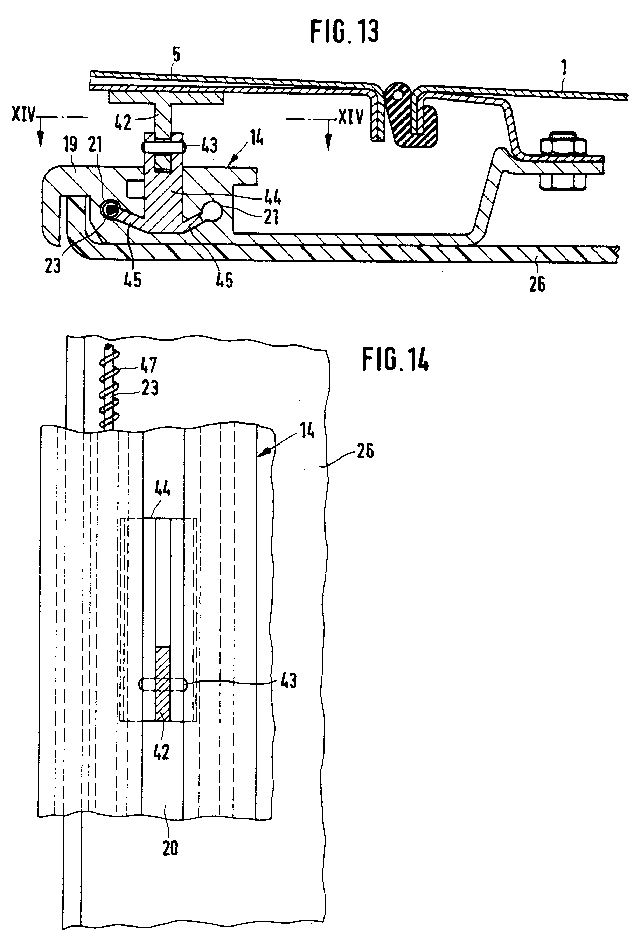

Jeweils an den inneren Deckelteilen 5 und 6, und zwar an ihren in Fahrtrichtung gesehen vorderen und hinteren Enden, befinden sich T-förmige Lagerböcke 42 (Fig. 13), welche an den Deckelteilen 5, 6 so befestigt sind, daß ihr freies Ende nach unten weist und schwenkbeweglich über einen Lagerzapfen 43 mit einem Führungsschuh 44 verbunden ist. Die Lagerbocke 42 sind an jedem inneren Deckelteil 5 und 6 in der Nähe der einander gegenüberliegenden Längsränder derselben angeordnet (Fig. 12).

Die Führungsschuhe 44 sind in den hinteren und vorderen Querteilen des Führungsrahmens 14 verschiebbar geführt. Die unteren Enden der Führungsschuhe 44 sind so ausgebildet, daß sie mit zwei Führungsstegen 45 in die schräg verlaufenden Öffnungsschlitze der Kabelkanäle 21 des verdickten Randes 19 des Führungsrahmens 14 hineinragen (Fig. 13). Die Führungsstege 45 weisen eine unterschiedliche Länge auf. Einer der beiden Führungsstege 45 ragt mit seinem freien Ende in einen Kabelkanal 21 hinein und ist dort nach Art eines Mitnehmers fest mit dem Ende eines Betätigungskabels 22 bzw. 23 verbunden. Der andere Führungssteg endet vor dem anderen Kabelkanal 21, so daß sein freies Ende mit dem anderen Betätigungskabel 23 bzw. 22 nicht in Berührung kommt.

Die Führungsschuhe 44 sind in den Querteilen des Führungsrahmens 14 so angeordnet, daß sie sich bei geschlossenem Deckel in der Nähe der Deckellängsmitte mit Abstand gegenüberstehen, wie in Fig. 12 dargestellt ist. Dabei befinden sich die mit den Enden der Betätigungskabel 22, 23 verbundenen Führungsstege 45 jeweils in den einander gegenüberliegenden Kabelkanälen 21, wie die Lage der Kabel in Fig. 5 verdeutlicht.

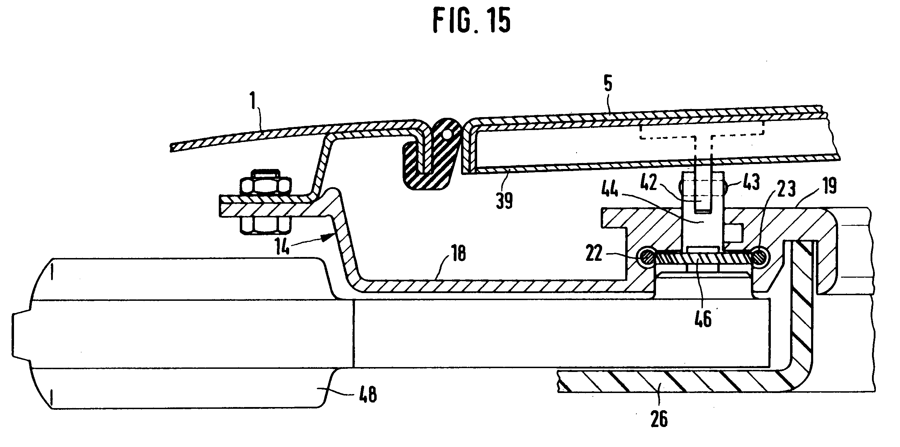

Die Betätigungskabel sind jeweils an beiden Enden mit Führungsschuhen 44 auf die beschriebene Weise verbunden. Beide Betätigungskabel 22, 23 erstrecken sich von dem vorderen Querteil des Führungsrahmens 10 ausgehend jeweils über ein Längsteil desselben bis etwa zur Mitte des hinteren Querteils. Die Führungsschuhe 44 jeweils eines Kabels befinden sich mit Bezug auf die Längsmittelachse des Deckels 3 auf unterschiedlichen Seiten, d.h. die beiden Antriebskabel greifen jeweils mit einem Ende an einen Führungsschuh des einen inneren Deckelteils und mit dem anderen Ende an dem diagonal gegenüberliegenden Führungsschuh des anderen inneren Deckelteils an. Im vorderen Querteil des Führungsrahmens 14 liegen sich die Betätigungskabel 22, 23 gegenüber. An dieser Stelle greift ein Zahnritzel 46 (Fig. 5, 15), welches das Abtriebselement eines elektrischen Getriebemotors 48 (Fig. 15) oder einer manuellen Antriebseinheit (nicht dargestellt) bildet, in die Gewindewicklungen 47 (Fig. 14) der beiden Betätigungskabel 22 und 23 ein. Der Getriebemotor bzw. die manuelle Antriebseinheit ist fest mit dem Führungsrahmen 14 zu einer Montageeinheit verbunden.

Je nach Drehrichtung des Zahnritzels 46 werden die Betätigungskabel 22, 23 gegenläufig so verschoben, daß beim Öffnen des Deckels 3 die Führungsschuhe 44 nach außen und beim Schließen nach innen zur Dachmitte hin bewegt werden. Beim Deckelöffnungsvorgang werden die inneren Deckelteile 5 und 6 über die mit den Führungsschuhen 44 gelenkig verbundenen Lagerböcke 42 entgegengesetzt zueinander verschoben und stützen sich über die Scharniere 35 an den äußeren Deckelteilen 4 bzw. 7 ab, die sich wiederum über die Lagerböcke 32 an den am Führungsrahmen 14 festen Schwenkbolzen 31 abstützen. Auf diese Weise werden die Deckelteile paarweise dachförmig nach oben angehoben, bis sich die Deckelteilpaare am Ende des Öffnungsvorganges aneinanderliegend und aufgestellt an den jeweils äußeren Dachrändern befinden. Der Schließvorgang verläuft in umgekehrter Reihenfolge.

## Patentansprüche

1. Dachkonstruktion für Fahrzeuge, mit einem einer Dachöffnung (2) zugeordneten mehrteiligen Deckel (3), der in der Schließstellung die Dachöffnung (2) vollständig ausfüllt und in Öffnungsstellungen die Dachöffnung (2) unter Ausschwenken seiner Teile (4 bis 7) mehr oder weniger freilegt, wobei die im wesentlichen als langgestreckte Rechtecke ausgebildeten Deckelteile (4 bis 7) paarweise aneinander scharniert unter Zusammenfaltung nach oben und parallel zu einem Paar der gegenüberliegenden Ränder der Dachöffnung (2) verlagerbar sind und dabei über gelenkig mit ihnen verbundene Führungsschuhe (44) an Führungsschienen (Führungsrahmen 14) verschiebbar geführt sind, die parallel zu dem anderen Paar der gegenüberliegenden Ränder der Dachöffnung (2) ausgerichtet sind, sich unterhalb der Deckelteile befinden und am festen Fahrzeugdach (1) befestigt sind, dadurch gekennzeichnet, daß die längeren Seiten der Deckelteile (4 bis 7) parallel zur Fahrzeuglängsachse ausgerichtet sind, daß mindestens an einem der Führungsschuhe (44) ein Antriebselement für die Verschiebung des Führungsschuhs an seiner Führungsschiene (Führungsrahmen 14) angreift, und daß die Deckelteile (4 bis 7) eines Paares an ihren aneinander scharnierten Rändern über ihre gesamte Länge mit einem den Spalt (36) zwischen den beiden Deckelteilen überbrückenden flexiblen Dichtungsprofil (37) dicht verbunden sind.

2. Dachkonstruktion nach Anspruch 1, dadurch gekennzeichnet, daß zwei spiegelbildlich übereinstimmende Paare von Deckelteilen (4, 5 und 6, 7) vorgesehen sind, deren äußere Deckelteile (4, 7) jeweils an in der Nähe des benachbarten Randes der Dachöffnung (2) angebrachten ortsfesten Schwenklagern (Schwenkbolzen 31, Lagerböcke 32) angelenkt sind, während deren innere Deckelteile (5, 6) bei geschlossenem Dach mit ihren benachbarten Rändern aneinanderliegen.

3. Dachkonstruktion nach Ansprüchen 1 oder 2, dadurch gekennzeichnet, daß die die langgestreckten Deckelteile (4 bis 7) aufnehmende, entsprechend in Richtung der Fahrzeuglängsachse langgestreckte Dachöffnung (2) im hinteren Bereich des Fahrzeugdaches (1) angeordnet ist, während im vorderen Bereich des Fahrzeugdaches eine weitere, mit ihren längeren Rändern quer zur Fahrzeuglängsachse ausgerichtete Dachöffnung (8) vorgesehen ist, der eine auch für die hintere Dachöffnung (2) windabweisend wirksame ausstellbare Lüftungsklappe (9) zugeordnet ist.

4. Dachkonstruktion nach einem der Ansprüche 1 bis 3, dadurch gekennzeichnet, daß bei jedem Paar von Deckelteilen (4, 5 und 6, 7) das nicht in der Nähe des benachbarten Randes der Dachöffnung (2) angelenkte Deckelteil (5, 6) in der Nähe seines Außenrandes mindestens an einem seiner Enden gelenkig mit einem Führungsschuh (44) verbunden ist.

5. Dachkonstruktion nach einem der Ansprüche 1 bis 4, dadurch gekennzeichnet, daß als Antriebselemente zwei an den Führungsschienen (Führungsrahmen 14) druck- und zugsteif geführte, flexible und gegenläufig angetriebene Betätigungskabel (22, 23) mit Gewindewicklung (47) verwendet sind, in die das Zahnritzel (46) einer Antriebseinheit kraftschlüssig eingreift, und daß die beiden Betätigungskabel (22, 23) jeweils an unterschiedliche Führungsschuhe (44) angreifen.

6. Dachkonstruktion nach einem der Ansprüche 1 bis 5, dadurch gekennzeichnet, daß bei Anordnung zweier Paare von Deckelteilen (4, 5 und 6, 7) die Führungsschuhe (44) den einander benachbarten inneren Deckelteilen (5, 6) zugeordnet sind, wobei die beiden Betätigungskabel (22, 23) jeweils mit einem Ende an einen Führungsschuh (44) des einen Deckelteils und mit dem anderen Ende an den diagonal gegenüberliegenden Führungsschuh (44) des anderen Deckelteils angreifen.

7. Dachkonstruktion nach einem der Ansprüche 1 bis 6, dadurch gekennzeichnet, daß die Führungsschienen Bestandteile eines die Dachöffnung (2) mit gleichbleibender Profilierung allseitig umgebenden Führungsrahmens (14) sind, an dem an einer Rahmenseite und bei Verwendung zweier Paare von Deckelteilen (4 bis 7) auch an der gegenüberliegenden Rahmenseite Lagerböcke (32) für die Schwenklagerung der Deckelteile befestigt sind.

8. Dachkonstruktion nach Anspruch 7, dadurch gekennzeichnet, daß an den Lagerböcken (32) nach oben gerichtete Anschläge (33) angebracht sind, welchen die an die Lagerböcke (32) angelenkten Deckelteile (4, 7) in ihrer Schließstellung in Fluchtungslage mit dem festen Fahrzeugdach (1) anliegen.

9. Dachkonstruktion nach einem der Ansprüche 1 bis 8, dadurch gekennzeichnet, daß die Deckelteile (4 bis 7) an ihren den Rändern der Dachöffnung (2) benachbarten Rändern nach unten abgebogen und an den an die Schwenklager (Schwenkbolzen 31, Lagerböcke 32) angelenkten Rändern zusätzlich zur Unterfangung der benachbarten Dachöffnungsränder nach außen abgebogen sind.

10. Dachkonstruktion nach Anspruch 1, dadurch gekennzeichnet, daß das Dichtungsprofil (37) im Querschnitt hutförmig mit einem nach unten offenen Hohlraum (38) ausgebildet ist, der bei zusammengefalteten Deckelteilen (4, 5 und 6, 7) die benachbarten Deckelteilränder und die Scharnieraugen aufnimmt.

11. Dachkonstruktion nach einem der Ansprüche 1 bis 10, dadurch gekennzeichnet, daß die inneren Deckelteile (5, 6) zweier Deckelteilpaare (4, 5 und 6, 7) mit ihren zueinander gekehrten Rändern unter Zwischenlage eines über ihre gesamte Länge durchgehenden Abdichtungsprofilstreifens (29) bei geschlossenem Dach dicht ineinandergreifend ausgebildet sind.

12. Dachkonstruktion nach Anspruch 11, dadurch gekennzeichnet, daß an dem einen Rand der zueinander gekehrten Ränder der Abdichtprofilstreifen (29) befestigt ist, der einen durchgehenden seitlichen Schlitz (40) aufweist, und daß der andere Rand L-förmig abgebogen ist und mit seinem vorstehenden Flansch (41) bei geschlossenem Dach in den Schlitz eingreift.

## Claims

1. Roof construction for vehicles, comprising a multi-part lid (3), associated with a roof opening (2), which in the closed position completely fills the roof opening (2) and in opened positions to a greater or lesser extent exposes the roof opening (2) with outward pivoting of its lid portions (4 to 7), wherein the lid portions (4 to 7), formed basically as elongate rectangles, hinged in pairs to one another, are displaceable with upward folding together and parallel to one pair of the mutually opposite edges of the roof opening (2) and are slidably guided by guide shoes (44), articulated to them, on guide rails (guide frame 14), which are orientated parallel to the other pair of mutually opposite edges of the roof opening (2), are situated beneath the lid portions and are fixed to the fixed vehicle roof (1), characterized in that the longer sides of the lid portions (4 to 7) are orientated parallel to the longitudinal axis of the vehicle, that a drive element for the displacement of the guide shoe on its guide rail (guide frame 14) acts on at least one of the guide shoes (44), and that the lid portions (4 to 7) of a pair are sealingly connected together, at their mutually hinged edges, over their entire length by a flexible sealing profile (37) bridging across the gap (36) between the two lid portions.

2. Roof construction according to Claim 1, characterized in that two pairs of lid portions (4, 5 and 6, 7), of mirror-image construction, are provided, the outer lid portions(4, 7) of which are articulated each to stationary pivot bearings (pivot pins 31, bearing blocks 32) mounted in the vicinity of the adjacent edge of the roof opening (2), while their inner lid portions (5, 6), when the roof is closed, bear against each other with their adjacent edges.

3. Roof construction according to Claims 1 or 2, characterized in that the roof opening (2), accommodating the elongate lid portions (4 to 7) and correspondingly elongate in the direction of the vehicle longitudinal axis, is disposed in the rear region of the vehicle roof (1), while in the forward region of the vehicle roof, a further roof opening (8), having its longer edges orientated transversely to the vehicle longitudinal axis, is provided, with which there is associated an outwardly pivotal ventilation flap (9), acting to deflect the wind for the rear roof opening (2) as well.

4. Roof construction according to one of Claims 1 to 3, characterized in that, at each pair of lid portions (4, 5 and 6, 7), the lid portion (5, 6) that is not articulated in the vicinity of the adjacent edge of the roof opening (2) is connected in articulated manner, in the vicinity of its outer edge, at at least one of its ends to a guide shoe (44).

5. Roof construction according to one of Claims 1 to 4, characterized in that, as drive elements, two flexible and opposably driven actuating cables (22, 23) having threaded winding (47), guided in compression-stiff and tension-stiff manner on the guide rails (guide frame 14) are used, into which the toothed pinion (46) of a drive unit engages force-fittingly, and that the two actuating cables (22, 23) act each upon different guide shoes (44).

6. Roof construction according to one of Claims 1 to 5, characterized in that, where two pairs of lid portions (4, 5 and 6, 7) are provided, the guide shoes (44) are associated with the mutually adjacent, inner lid portions (5, 6), the two actuating cables (22, 23) each engaging, with one end, on a guide shoe (44) of the one lid portion and, with the other end, on the diagonally opposite guide shoe (44) of the other lid portion.

7. Roof construction according to one of Claims 1 to 6, characterized in that the guide rails are components of a guide frame (14), surrounding the roof opening (2) on all sides with a constant profile, to which (guide frame) bearing blocks (32) for the pivotal mounting of the lid portions are fixed on the one frame side and, when two pairs of lid portions (4 to 7) are used, on the opposite frame side also.

8. Roof construction according to Claim 7, characterized in that upwardly orientated stops (33) are provided on the bearing blocks (32), against which (stops) the lid portions (4, 7) articulated to the bearing blocks (32) bear in their closed position, in an orientation flush with the fixed automobile roof (1).

9. Roof construction according to one of Claims 1 to 8, characterized in that the lid portions (4 to 7) are downwardly bent at their edges adjacent to the edges of the roof opening (2) and, at the edges articulated to the pivot bearings (pivot pins 31, bearing blocks 32), are additionally outwardly bent to engage beneath the adjacent edges of the roof opening.

10. Roof construction according to Claim 1, characterized in that the sealing profile (37) is hat-shaped in cross-section with a downwardly open cavity (38), which, when the lid portions (4, 5 and 6, 7) are folded together, receives the adjacent edges of the lid portions and the hinge eyes.

11. Roof construction according to one of Claims 1 to 10, characterized in that the inner lid portions (5, 6) of two lid portion pairs (4, 5 and 6, 7) are constructed to engage sealingly into one another when the roof is closed with their mutually facing edges, with insertion between of a sealing profile strip (29) continuous throughout their length.

12. Roof construction according to Claim 11, characterized in that, to the one edge of the mutually facing edges, the sealing profile strip (29) is fixed, which possesses a continuous, lateral slit (40), and that the other edge is bent to a L-shape and engages, with its projecting flange (41), into the slit when the roof is closed.

## Revendications

1. Construction de toit pour véhicules, comportant une couverture (3) en plusieurs parties associée à une ouverture (2) du toit, ladite couverture remplissant entièrement l'ouverture (2) du toit dans la position de fermeture, et découvrant plus ou moins l'ouverture (2) du toit dans la position d'ouverture par pivotement de ses parties (4 à 7) vers l'extérieur; dans laquelle les parties de couverture (4 à 7) réalisées sensiblement sous la forme de rectangles allongés peuvent être déplacées deux par deux en étant articulées l'une à l'autre en se repliant vers le haut et parallèlement à une paire des bordures en vis-à-vis de l'ouverture (2) du toit, et elles sont guidées de façon mobile via des patins de guidage (44) reliés en articulation à celles-ci dans des rails de guidage (cadre de guidage 14) qui sont dirigés parallèlement à l'autre paire des bordures en vis-à-vis de l'ouverture (2) du toit, qui se trouvent au-dessous des parties de couverture et qui sont fixés sur le toit fixe (1) du véhicule, caractérisée en ce que les côtés longs des parties de couverture (4 à 7) sont dirigés parallèlement à l'axe longitudinal du véhicule, en ce qu'au moins un des patins de guidage (44) est attaqué par un élément d'entraînement pour le déplacement du patin de guidage sur son rail de guidage (cadre de guidage 14), et en ce que les parties de couverture (4 à 7) d'une paire sont reliées de façon étanche par leurs bordures mutuellement articulées sur toute leur longueur à un profilé d'étanchement flexible (37) recouvrant la fente (36) entre les deux parties de couverture.

2. Construction de toit selon la revendication 1, caractérisée en ce qu'il est prévu deux paires de parties de couverture (4, 5 et 6, 7) qui se correspondent de façon symétrique, dont les parties de couverture extérieures (4, 7) sont articulées respectivement sur des paliers de pivotement (tige de pivotement 31, paliers 32) fixes montés près de la bordure voisine de l'ouverture (2) du toit, tandis que leurs parties de couverture intérieures (5, 6) sont en contact mutuel par leurs bordures voisines lorsque le toit est fermé.

3. Construction de toit selon l'une ou l'autre des revendications 1 et 2, caractérisée en ce que l'ouverture (2) du toit allongée en direction de l'axe longitudinal du véhicule et recevant les parties de couverture allongées (4 à 7) est agencée dans la région arrière du toit de véhicule (1), tandis que dans la région avant du toit de véhicule est prévue une autre ouverture (8) du toit dirigée par ses bordures plus longues transversalement par rapport à l'axe longitudinal du véhicule, à laquelle est associé un volet d'aération (9) pouvant être redressé et agissant de déflecteur de vent également pour l'ouverture (2) arrière du toit.

4. Construction de toit selon l'une quelconque des revendications 1 à 3, caractérisée en ce que pour chaque paire de parties de couverture (4, 5 et 6, 7), la partie de couverture (5, 6) qui n'est pas articulée près de la bordure voisine de l'ouverture (2) du toit est reliée en articulation près de sa bordure extérieure au moins par une de ses extrémités à un patin de guidage (44).

5. Construction de toit selon l'une quelconque des revendications 1 à 4, caractérisée en ce qu'en tant qu'éléments d'entraînement sont utilisés deux câbles d'actionnement flexibles (22, 23) entraînés en sens opposés et guidés fermement en compression et en traction sur les rails de guidage (cadre de guidage 14), lesdits câbles comportant des spires (47) dans lesquels s'engrène en coopération de forces le pignon denté (46) d'une unité d'entraînement, et en ce que les deux câbles d'actionnement (22, 23) attaquent chacun des patins de guidage (44) différents.

6. Construction de toit selon l'une quelconque des revendications 1 à 5, caractérisée en ce que pour l'agencement de deux paires de parties de couverture (4, 5 et 6, 7) les patins de guidage (44) sont associés aux parties de couvertures intérieures voisines (5, 6), les deux câbles d'actionnement (22, 23) attaquant respectivement par une extrémité un patin de guidage (44) de l'une des parties de couverture et par l'autre extrémité le patin de guidage (44) diagonalement opposé de l'autre partie de couverture.

7. Construction de toit selon l'une quelconque des revendications 1 à 6, caractérisée en ce que les rails de guidage sont des composants d'un cadre de guidage (14) qui entoure l'ouverture (2) du toit de tous les côtés et présente un profilage constant, des paliers (32) pour le montage en pivotement des parties de couverture étant fixés sur ledit cadre de guidage (14) et sur un côté de celui-ci, et lors de l'utilisation de deux paires de parties de couverture (4 à 7) également sur le côté opposé du cadre (14).

8. Construction de toit selon la revendication 7, caractérisée en ce que sur les paliers (32) sont fixées des butées (33) dirigées vers le haut, contre lesquelles s'appuient les parties de couverture (4, 7) articulées sur les paliers (32) dans leur position de fermeture en affleurement avec le toit fixe (1) du véhicule.

9. Construction de toit selon l'une quelconque des revendications 1 à 8, caractérisée en ce que les parties de couverture (4 à 7) sont repliées vers le bas sur leurs bordures voisines des bordures de l'ouverture (2) du toit, et sont repliées en supplément vers l'extérieur sur leurs bordures articulées sur les paliers de pivotement (tige de pivotement 31, paliers 32) pour l'étayage des bordures voisines de l'ouverture du toit.

10. Construction de toit selon la revendication 1, caractérisée en ce que le profilé d'étanchement (37) est réalisé en section transversale sous la forme d'un chapeau comportant un creux (38) ouvert vers le bas qui reçoit, lorsque les parties de couverture (4, 5 et 6, 7) sont pliées, les bordures voisines des parties de couverture et les oeillets de charnière.

11. Construction de toit selon l'une quelconque des revendications 1 à 10, caractérisée en ce que les parties de couverture intérieures (5, 6) de deux paires de parties de couverture (4, 5 et 6, 7) sont réalisées en engagement mutuel étanche par leurs bordures orientées l'une vers l'autre avec interposition d'une bande profilée d'étanchement (29) continue sur toute leur longueur, lorsque le toit est fermé.

12. Construction de toit selon la revendication 11, caractérisée en ce que sur l'une des bordures orientées l'une vers l'autre est fixée la bande profilée d'étanchement (29) qui présente une fente latérale continue (40), et en ce que l'autre bordure est repliée sous la forme d'un L et s'engage par sa bride (41) en projection dans la fente lorsque le toit est fermé.
